# FASCICULE DE BREVET EUROPEEN

(11) **EP 0 643 922 B1**
(45) Date de publication et mention de la délivrance du brevet: **11.10.2000**
(21) Numéro de dépôt: 94111929.9
(22) Date de dépôt: 30.07.1994
(51) Int. Cl.: A23L 1/227

(54) **Agent aromatisant**
Gewürzmittel
Flavouring agent

(30) Priorité: 21.09.1993 CH 283693
(43) Date de publication de la demande: 22.03.1995
(73) Titulaire: SOCIETE DES PRODUITS NESTLE S.A., 1800 Vevey (CH)
(72) Inventeur: Heyland, Sven, CH-8534 Weiningen (CH); Ho Dac, Thang, CH-1052 Le Mont-s/Lausanne (CH); Hose, Hugh, CH-1436 Treycovagnes (CH); Wood, Robert Dustan, CH-1004 Lausanne (CH)
(74) Mandataire: Wavre, Claude-Alain

(56) Documents cités:
- EP-A- 0 030 327
- EP-A- 0 199 981
- EP-A- 0 320 057
- EP-A- 0 406 598
- EP-A- 0 429 760
- WO-A-86/03943
- FR-A- 2 210 359
- R.GHERNA ET AL. 'Catalogue of bacreria,phages and rDNA vectors' 1985 , AMERICAN TYPE CULTURE COLLECTION sixteenth edition pages 22,24,29 *page 22,n 6598,21415 à 21418* *page 24:"Bacillus natto"* *page 29,n 15245*

## Description

La présente invention a pour objet un procédé de préparation d'un agent aromatisant dans lequel on fait réagir un mélange comprenant une source d'acides aminés libres et au moins un sucre réducteur.

Une manière traditionnelle de préparer une source d'acides aminés libres qui se prête à la confection d'un agent aromatisant par réaction avec un sucre réducteur, autrement dit par réaction de Maillard, est l'hydrolyse à l'acide chlorhydrique concentré d'une matière riche en protéines telle que des tourteaux d'arachide ou de soya, par exemple.

US 4466986 (Nestec S.A.) décrit un procédé de ce type, dans lequel on soumet l'hydrolysat à un fractionnement sur une colonne de charbon actif granulaire et, en sélectionnant ou en calibrant les fractions, on obtient une source d'acides aminés claire et neutre de goût qui ne masque pas l'arôme dégagé ensuite lors de la réaction de Maillard.

Cependant, dans des procédés plus récents, on préfère utiliser une hydrolyse plus douce que l'hydrolyse traditionnelle à l'acide chlorhydrique concentré, notamment une hydrolyse enzymatique. Un problème à résoudre avec de tels procédés réside dans l'amertume ou le goût particulier que peuvent présenter de tels hydrolysats.

US 5141757 (Nestec S.A.), par exemple, décrit un procédé de préparation d'un agent aromatisant dans lequel on hydrolyse avec une protéase une suspension aqueuse d'une matière riche en protéines telle qu'une farine de légumineuse, par exemple, et on fait mûrir ou on affine la suspension à l'aide d'enzymes de koji.

FR-A-2210359 décrit un procédé de préparation de substances aromatiques dans lequel on chauffe un produit liquide obtenu par protéolyse enzymatique, notamment par l'action d'une souche de *B. subtilis* et/ou par fermentation lactique de produits laitiers contenant des hydrates de carbone, notamment le lactose.

La présente invention a pour but de proposer un nouveau procédé de préparation d'un agent aromatisant dans lequel on fait réagir un mélange comprenant une source d'acides aminés libres obtenue par fermentation d'une matière riche en protéine, procédé qui permette d'obtenir un produit de réaction présentant un goût et une odeur agréables, notamment un goût dépourvu de toute amertume et, de préférence, une odeur relativement neutre.

A cet effet, dans le procédé selon la présente invention,
- on fait fermenter des graines de légumineuses cuites avec une souche de *Bacillus subtilis* ou *Bacillus natto*, durant 1-7 d à 30-45°C, avant fermentation on ajoute aux graines 0,5-5% en poids d'hydrate de carbone assimilable par ladite souche,
- on prépare un mélange comprenant ladite matière fermentée, au moins un sucre réducteur et de l'eau,
- on fait réagir ledit mélange par chauffage à 80-150°C durant 1 min à 4 h, et
- l'on sèche le produit de réaction.

Pour mettre en oeuvre le présent procédé, on choisit une matière riche en protéines composée de graines de légumineuses cuites, notamment de graines de soya ou de caroube, dépelliculées ou non et/ou subdivisées, en particulier concassées, ou non. Pour préparer lesdites graines de légumineuses cuites, on peut les bouillir durant 40-60 min ou les faire tremper durant 20 min à 5 h à 20-60°C et les chauffer ensuite à la vapeur, de préférence en autoclave ou dans un cuiseur à bande, à 120-140°C durant 2-30 min ce qui assure non seulement la cuisson mais aussi la stérilisation des graines, par exemple.

Ladite souche de *Bacillus subtilis* ou de *Bacillus natto* peut être une souche du commerce telle qu'on peut s'en procurer notamment au Japon, ou une souche isolée d'un produit du commerce ou de l'artisanat local, à savoir un dawadawa ou un iru d'Afrique subsaharienne ou de l'ouest, ou un natto du Japon, de Chine, de Taiwan ou de Thaïlande, par exemple. On peut également se procurer de telles souches dans des collections officielles telles que l'American Type Culture Collection (ATCC) aux USA ou la Collection Nationale de Cultures de Microorganismes (CNCM) en Europe.

De préférence, on sélectionne des souches de *B.natto* ou *B.subtilis* qui produisent relativement peu de mucilage visqueux tout en assurant une bonne hydrolyse et une teneur élevée de l'hydrolysat en acide glutamique. Ceci permet en particulier de faciliter des opérations de pompage et transfert du produit en cours de fabrication industrielle.

Pour préparer une culture ou levain desdites souches, on peut les cultiver dans un milieu aqueux contenant 1-5% de farine de soya, 0,5-3% d'extrait de malt et 0,0-0,6% d'extrait de levure, sous aération de 0,01-0,5 vol/vol/min, durant 10 h à 3 d à 30-45°C, par exemple.

Pour faire fermenter la matière riche en protéines composée de graines de légumineuses cuites, de préférence sous forme humide et subdivisée, on peut l'inoculer avec 0,5-2,0 % en volume d'une culture contenant 5x10⁷-10⁹ germes de ladite souche par ml, et laisser fermenter durant 1-7 d à 35-45°C tout en aérant avec de l'air humide, notamment de l'air humidifié à saturation.

La matière fermentée peut présenter une odeur caractéristique du natto ou du dawadawa. Sans vouloir se lier par cette interprétation, on peut associer cette odeur caractéristique à la présence dans la matière fermentée d'acides gras tels que l'acide 2-méthyl butanoïque et l'acide 3-méthyl butanoïque, par exemple, qui peuvent provenir respectivement de la dégradation des acides aminés isoleucine et leucine.

Dans le cadre de la présente invention, on a en effet constaté une corrélation très nette entre l'intensité de l'odeur caractéristique du natto ou du dawadawa et la concentration totale en ces deux acides que peut présenter la matière riche en protéines fermentée. De manière surprenante, l'intensité de cette odeur caractéristique et la concentration en ces deux acides diminuent fortement (diminution de la concentration de environ 40-60% sur matière sèche de la matière fermentée, par exemple) lors de la mise en oeuvre des étapes ultérieures du procédé. Mais elles peuvent néanmoins demeurer notables (concentration totale de environ 1600-2100 ppm sur matière sèche de matière fermentée, par exemple) dans le produit final.

Pour obtenir une matière fermentée présentant une odeur relativement neutre, qui se distingue de manière surprenante de l'odeur caractéristique du natto ou du dawadawa et qui permette d'obtenir un produit de réaction présentant un goût agréable, notamment un goût de viande, qui ne soit pas accompagné d'une odeur trop prononcée de natto ou de dawadawa, on ajoute aux graines de légumineuses cuites, avant fermentation, 0,5-5% en poids d'hydrate de carbone, notamment de glucose et/ou de saccharose, ou d'une source d'hydrate de carbone, notamment de farine de riz ou de malt d'orge, assimilable par ladite souche.

On a constaté que l'on peut en effet diminuer ainsi notablement la concentration en acide 2-méthyl butanoïque et 3-méthyl butanoïque de la matière fermentée et par conséquent diminuer d'autant plus fortement celle du produit final.

On peut réaliser la fermentation sur des claies, sur un plateau percé de trous ou dans un appareil du commerce tel que l'appareil connu au Japon sous le nom de machine à koji, par exemple.

On peut, avant de préparer le mélange pour ladite réaction, mettre les graines fermentées en suspension aqueuse à 15-19% en poids de chlorure de sodium. Dans ces conditions, les graines fermentées peuvent se conserver sans risque que la fermentation se poursuive de manière incontrôlée et avec un risque réduit de contamination par d'autres microorganismes.

Pour ladite réaction, on prépare de préférence un mélange présentant une teneur en eau de 35-55% et comprenant, en % en poids de matière sèche, 24-97% de ladite matière fermentée, 2-40% de chlorure de sodium, 1-4% de sucre réducteur ajouté, 0-2% d'une substance contenant du soufre, 0-15% de glutamate monosodique, et 0-15% de saccharose.

Les quatre derniers ingrédients ci-dessus sont destinés à donner, le cas échéant, au présent agent aromatisant le pouvoir de conférer un goût rappelant celui de la viande, un arôme renforcé et/ou un arôme arrondi. Ladite substance contenant du soufre peut être choisie dans le groupe comprenant la cystéine, la cystine, la méthionine, la thiamine et leurs mélanges, par exemple.

L'addition d'une quantité notable de chlorure de sodium, telle que le mélange en présente une teneur de 30-40%, par exemple, est préférée parcequ'outre l'effet attendu sur l'équilibre organoleptique que peut conférer l'agent aromatisant, elle permet d'obtenir simultanément un effet surprenant facilitant le séchage du produit après la réaction.

On fait réagir le mélange par chauffage à 80-150°C durant 1 min à 4 h, les durées relativement courtes correspondant aux températures relativement élevées et inversément, 100°C durant 3h étant une combinaison de valeurs intermédiaires recommandables, par exemple.

De préférence, on fait réagir le mélange par chauffage à 120-150°C durant 1 à 40 min, car de la sorte on peut obtenir simultanément un effet surprenant de stérilisation chimique et bactériologique du produit de réaction.

De préférence, on sèche ensuite le produit de réaction jusqu'à une teneur en eau résiduelle inférieure ou égale à 2%.

On peut réaliser la réaction et le séchage dans deux appareils distincts, notamment dans une autoclave ou dans un cuiseur à bande et dans un séchoir sous vide, puis casser et broyer dans un moulin à marteaux la masse compacte obtenue, par exemple. On peut aussi réaliser la réaction et le séchage par cuisson extrusion dans une extrudeuse à double vis, et découper ou broyer délicatement le boudin expansé obtenu, par exemple.

L'agent aromatisant ainsi obtenu par le présent procédé peut être utilisé tel quel pour conférer une flaveur relevée, notamment un goût rappelant celui de la viande aux mets les plus variés, ou en combinaison avec d'autres ingrédients, pour la confection de sauces et potages, par exemple.

Les exemples ci-après sont présentés à titre d'illustration du procédé et du produit selon la présente invention. Les pourcentages y sont donnés en poids sauf indication contraire.

### Exemple comparatif (i)

Pour préparer une culture ou levain de *B.natto*, on prépare un milieu de culture comprenant 4% de farine de soya non dégraissée, 2% d'extrait de malt, 0,5% d'extrait de levure et 93,5% d'eau. On stérilise le milieu à 125°C durant 15 min et on l'inocule avec 1% d'une préculture contenant, par ml, 5x10⁸ germes d'une souche de *B.natto* isolée d'un natto artisanal du Japon. On incube à 40°C durant 24 h sous agitation et sous aération à raison de 0,2 vol d'air par vol de milieu et par min.

On concasse des graines de soya non dépelliculées dans un moulin à marteau jusqu'à une dimension moyenne de particules de 3,6 mm. On trempe les graines de soya concassées dans une fois leur volume d'eau à 60°C durant 30 min. On les cuit et stérilise dans un cuiseur à bande à 130°C durant 4 min et on les refroidit à 40°C. On les inocule en pulvérisant dessus, à la sortie du cuiseur à bande, 1% en volume de la culture préparée comme indiqué ci-dessus qui contient 5x10⁸ germes de *B.natto* par ml. On répartit la masse de graines inoculée dans une machine à koji en une couche de 40 cm d'épaisseur. On laisse fermenter durant 3 d tout en aérant en faisant passer au travers de la masse de l'air à environ 40°C humidifié à saturation.

La température des graines cuites monte d'environ 40°C à environ 45°C entre la 4ème et la 8ème h de fermentation. Pour que cette température n'augmente pas davantage, on augmente le débit d'air que l'on insuffle au travers de la masse et l'on maintient ce débit jusqu'à la fin des premières 24 h, après quoi la température revient à environ 41°C et l'on rétablit le débit d'air initial. Au cours de la fermentation, la teneur en matière sèche des graines cuites augmente progressivement de environ 50% à environ 63,5%.

A l'issue de la fermentation, les graines cuites fermentées présentent des teneurs respectives de 4,3% en azote total, 1,0% en azote aminé (soit environ 6,25% d'acides aminés et /ou peptides dont 1,04% d'acide glutamique) et 1,04% en sucres réducteurs, qui sont relativement élevées et conviennent particulièrement bien dans le cadre de la mise en oeuvre du présent procédé.

On mélange 36,2% de ces graines fermentées avec 29,2% d'eau, 0,9% de xylose, 19,7% de chlorure de sodium, 0,9% de cystéine, 6,6% de glutamate monosodique et 6,5% de saccharose.

On obtient ainsi un mélange présentant une teneur en eau de 42,76% et comprenant, en % en poids de matière séche, 39,8% de matière sèche de graines fermentées dont 0,65% de sucres réducteurs, 1,5% de xylose, 34,4% de chlorure de sodium, 1,5% de cystéine, 11,4% de glutamate monosodique et 11,4% de saccharose.

On fait réagir le mélange par chauffage en cuve à double manteau à 100°C durant 3 h. On le sèche sous une pression réduite de 15 mbar à 95°C jusqu'à une teneur en matière sèche de 1,5%. On le casse et on le réduit en poudre.

L'agent aromatisant obtenu présente une teneur en eau de 2% et une teneur totale en acides 2-méthyl butanoïque et 3-méthyl butanoïque de 1865 ppm sur poids de matière sèche de graines fermentées.

Pour déguster cet agent aromatisant, on en dissout 5 g additionnés de 5 g de chlorure de sodium dans 1 L d'eau bouillante. L'eau ainsi aromatisée présente un goût agréable, dépourvu de toute amertume, rappelant celui d'un bouillon de viande rehaussé d'une odeur caractéristique de natto.

### Exemple comparatif (ii)

On procède de la manière décrite à l'exemple comparatif (i), à l'exception du fait que l'on fait réagir ledit mélange en autoclave à 120°C durant 40 min.

On obtient un agent aromatisant capable de conférer les mêmes propriétés organoleptiques que l'agent obtenu à l'exemple comparatif (i) mais qui présente une conservabilité exceptionnelle due au fait que ces conditions de réaction permettent d'obtenir simultanément une stérilisation chimique et biologique du produit.

### Exemple comparatif (iii)

On procède de la manière décrite à l'exemple comparatif (i), à l'exception du fait que l'on inocule le mélange avec une culture de *B.subtilis* isolée d'un dawadawa de l'artisanat local d'Afrique subsaharienne.

On obtient un agent aromatisant qui, dégusté dans les mêmes conditions que celui de l'exemple comparatif (i), présente un goût agréable, dépourvu de toute amertume, rappelant celui d'un bouillon de viande rehaussé d'un goût caractéristique de dawadawa.

### Exemple comparatif (iv)

On procède de la manière décrite à l'exemple comparatif (i) jusqu'à l'obtention des graines cuites fermentées.

On mélange 44% de graines fermentées avec 40% d'eau et 16% de chlorure de sodium. Cette suspension peut être conservée durant une semaine à température ambiante sans présenter de modification bactériologique ou organoleptique notable.

On mélange 78,8% de cette suspension aqueuse avec 0,8% de xylose, 6,8% de chlorure de sodium, 0,8% de cystéine, 6,4% de glutamate monosodique et 6,4% de saccharose. On obtient ainsi un mélange présentant une teneur en eau de 44,33% et une composition de la matière sèche semblable à celle du mélange obtenu à l'exemple 1.

On fait réagir le mélange en autoclave à 120°C durant 40 min, on le sèche et on le réduit en poudre.

On obtient un agent aromatisant qui, dégusté dans les mêmes conditions que celui de l'exemple comparatif (i), présente un goût agréable, dépourvu de toute amertume, rappelant celui d'un bouillon de viande rehaussé d'une odeur caractéristique de natto.

### Exemple 1

On procède de la manière décrite à l'exemple comparatif (iv), à l'exception du fait que l'on ajoute aux graines, avant fermentation, un faible pourcentage d'hydrate de carbone ou d'une source d'hydrate de carbone assimilable, en l'occurrence 1% de glucose, dans le but d'atténuer l'odeur caractéristique de natto présenté par le produit final.

Le tableau I ci-après présente et permet de comparer la teneur totale en acides 2 et 3- méthyl butanoïques et l'intensité de l'odeur de natto présentées en plus du goût de viande par les agents aromatisants obtenus selon le présent exemple 1 et selon l'exemple comparatif (iv).

**Tableau I**

| Ex No | Hydrate de C ajouté | Acides 2- et 3-méthyl butanoïques (ppm) | odeur de natto |
|---|---|---|---|
| iv* | | 1865 | caractéristique |
| 5 | 1% glucose | 746 | fortement atténuée |

| | | | |
|---|---|---|---|
| * comparatif | | | |

Les résultats présentés dans ce tableau démontrent qu'il est possible de préparer par le présent procédé un agent aromatisant capable de conférer un goût agréable, notamment un goût de viande, dépourvu de toute amertume et présentant une odeur de natto fortement atténuée.

## Revendications

1. Procédé de préparation d'un agent aromatisant, dans lequel
- on fait fermenter des graines de légumineuses cuites avec une souche de *Bacillus subtilis* ou *Bacillus natto* durant 1-7 d à 30-45°C, avant fermentation on ajoute aux graines 0,5-5% en poids d'hydrate de carbone ou d'une source d'hydrate de carbone assimilable par ladite souche,
- on prépare un mélange comprenant ladite matière fermentée, au moins un sucre réducteur et de l'eau,
- on fait réagir ledit mélange par chauffage à 80-150°C durant 1 min à 4 h, et
- l'on sèche le produit de réaction.

2. Procédé selon la revendication 1, dans lequel lesdites graines de légumineuses sont des graines de soya ou de caroube, dépelliculées ou non et/ou subdivisées, notamment concassées ou non.

3. Procédé selon la revendication 1, dans lequel on inocule ladite matière riche en protéines avec 0,5-2,0 % en volume d'une culture contenant 5x10⁷-10⁹ germes de ladite souche par mi, et l'on laisse fermenter tout en aérant avec de l'air humide.

4. Procédé selon la revendication 1, dans lequel, avant fermentation, on ajoute aux graines 0,5-5% en poids de glucose et/ou de saccharose, ou de farine de riz ou de malt d'orge, assimilable par ladite souche.

5. Procédé selon la revendication 1, dans lequel, avant de préparer le mélange pour ladite réaction, on met les graines fermentées en suspension aqueuse à 15-19% en poids de chlorure de sodium.

6. Procédé selon la revendication 1, dans lequel on prépare un mélange présentant une teneur en eau de 35-55% et comprenant, en % en poids de matière sèche, 24-97% de ladite matière fermentée, 2-40% de chlorure de sodium, 1-4% de sucre réducteur ajouté, 0-2% d'une substance contenant du soufre, 0-15% de glutamate monosodique, et 0-15% de saccharose.

7. Procédé selon la revendication 1, dans lequel on fait réagir le mélange par chauffage à 120-150°C durant 1-40 min.

8. Procédé selon la revendication 1, dans lequel on sèche ledit produit de réaction jusqu'à une teneur en eau résiduelle égale ou inférieure à 2%.

## Claims

1. Process for preparing a flavouring agent, wherein:
- cooked pulse seeds are fermented with a strain of *Baccillus subtilis* or *Baccillus natto* for 1-7 d at 30-45°C, 0.5-5 % by weight of carbohydrate or a source of carbohydrate assimilable by the said strain being added to the seeds before fermentation,
- a mixture is prepared comprising the said fermented material, at least one reducing sugar and water,
- the said mixture is caused to react by heating at 80-150°C for 1 min to 4 h, and
- the reaction product is dried.

2. Process according to claim 1, wherein the said pulse seeds are soya or carob seeds optionally hulled and/or optionally subdivided, in particular optionally crushed.

3. Process according to claim 1, wherein the said mixture rich in proteins is inoculated with 0.5-2.0 % by volume of a culture containing 5×10⁷-10⁹ germs of the said strain per ml, and is allowed to ferment with aeration by humid air.

4. Process according to claim 1 wherein, before fermentation, glucose and/or sucrose, or a rice flour or barley malt assimilable by the said strain are added to the seeds.

5. Process according to claim 1 wherein, before preparing the mixture for the said reaction, the fermented seeds are suspended in water containing 15-19 % by weight of sodium chloride.

6. Process according to claim 1, wherein a mixture is prepared having a water content of 35-55 % and comprising, in % by weight of dry matter, 24-97 % of the said fermented material, 2-40 % of sodium chloride, 1-4 % of added reducing sugar, 0-2 % of a sulfur-containing substance, 0-15 % of monosodium glutamate and 0-15 % of sucrose.

7. Process according to claim 1, wherein the mixture is caused to react by heating at 120-150°C for 1-40 min.

8. Process according to claim 1, wherein the said reaction product is dried to a residual water content equal to or less than 2 %.

## Patentansprüche

1. Verfahren zur Herstellung eines Aromamittels, bei dem man
- Kerne von gegarten Hülsenfrüchten mit einem Stamm von *Bacillus subtilis* oder *Bacillus natto* für 1-7 Tage bei 30-45 °C fermentieren läßt,
- vor der Fermentation den Kernen 0,5-5 Gew.-% eines für diesen Stamm assimilierbaren Kohlenhydrats oder einer Quelle eines solchen beigibt,
- eine Mischung herstellt, die das fermentierte Material, mindestens einen reduzierenden Zucker und Wasser enthält,
- die Mischung durch Erhitzen auf 80-150°C für 1 min-4 h reagieren läßt und
- das Reaktionsprodukt trocknet.

2. Verfahren nach Anspruch 1, bei dem die Hülsenfruchtkerne Soya- oder Karubakerne sind, die geschält wurden oder nicht und/oder zerteilt wurden, insbesondere grobzerkleinert wurden oder nicht.

3. Verfahren nach Anspruch 1, bei dem man das an Proteinen reiche Material mit 0,5-2,0 Vol.-% einer Kultur beimpft, die 5x10⁷-10⁹ Keime des entsprechenden Stammes pro ml enthält, und unter Belüftung mit Feuchtluft fermentieren läßt.

4. Verfahren nach Anspruch 1, bei dem man vor der Fermentation den Kernen 0,5-5 Gew.-% Glucose und/oder Saccharose, Reismehl oder Gerstenmalz beigibt, die für diesen Stamm assimilierbar sind.

5. Verfahren nach Anspruch 1, bei dem man vor der Herstellung der Mischung für die Reaktion die fermentierten Kerne in wässrige Suspension mit 15-19 Gew.-% Natriumchlorid bringt.

6. Verfahren nach Anspruch 1, bei dem man eine Mischung mit einem Wassergehalt von 35-55% herstellt, die, in Gew.-% der Trockenmasse, 24-97 % fermentiertes Material, 2-40 % Natriumchlorid, 1-4 % hinzugefügten reduzierenden Zucker, 0-2 % einer schwefelhaltigen Substanz, 0-15 % Mononatriumglutamat und 0-15 % Saccharose enthält.

7. Verfahren nach Anspruch 1, bei dem man die Mischung durch Erhitzen auf 120-150 °C für 1-40 min reagieren läßt.

8. Verfahren nach Anspruch 1, bei dem man das Reaktionsprodukt bis zu einem Restwassergehalt ≤ 2% trocknet.
